# FASCICULE DE BREVET EUROPEEN

(11) **EP 1 886 760 B1**
(45) Date de publication et mention de la délivrance du brevet: **09.09.2009**
(21) Numéro de dépôt: 07111597.6
(22) Date de dépôt: 03.07.2007
(51) Int. Cl.: B23P 19/00, B23P 19/04, F01L 1/053

(54) **Procédé de positionnement et de montage dans la culasse d'un moteur de véhicule d'au moins un arbre a cames sur roulements, et dispositif pour la mise en oeuvre d'un tel procédé**
Verfahren zur Positionierung und Montage im Zylinderkopf eines Motorfahrzeugs mit Hilfe einer gelagerten Nockenwelle und Vorrichtung zur Umsetzung dieses Verfahrens
Method of positioning and mounting in the cylinder head of a vehicle engine at least one camshaft on bearings and device for implementing such a method

(30) Priorité: 10.08.2006 FR 0653351
(43) Date de publication de la demande: 13.02.2008
(73) Titulaire: Peugeot Citroën Automobiles SA, 78943 Vélizy-Villacoublay Cedex (FR)
(72) Inventeur: Hocine, Ali, 92400, Courbevoie (FR)
(74) Mandataire: Allain, Laurent

(56) Documents cités:
- EP-A1- 1 460 308
- DE-A1- 19 831 772
- US-A- 4 450 609

## Description

La présente invention concerne un procédé de positionnement et de montage dans la culasse d'un moteur de véhicule d'au moins un arbre à cames sur roulements selon le préambule de la revendication 1. Elle concerne également un dispositif pour la mise en oeuvre d'un tel procédé selon le préambule de la revendication 6.

Les normes de plus en plus sévères relatives à la pollution atmosphérique et à l'émission de CO₂ des moteurs thermiques imposent aux constructeurs automobiles des efforts toujours plus importants de recherche et développement, en particulier pour réduire la consommation des moteurs.

Parmi les nombreuses voies d'exploration actuelles, il y a la recherche de perfectionnements technologiques dans le but de réduire les Pertes Moyennes par Frottements (PMF). Par exemple, en montant les arbres à cames sur des roulements, on réduit la résistance de frottement et les pertes de puissance au niveau mécanique.

Les arbres à cames sont assemblés, de manière classique, par montage sur une barre ou un tube, à froid ou à chaud, de leurs différents composants : cames, cibles, pignons, etc.

Dans les arbres à cames sur roulements, on intercale entre les cames des roulements à aiguilles.

De manière classique, on utilise des bagues en matière plastique ou des circlips, qui permettent d'assurer le maintien en position des roulements sur la barre (ou tube) de l'arbre en latéral, c'est-à-dire selon la direction longitudinale ou axiale de la barre. En fonctionnement, le défrettage de ces éléments de maintien en position en latéral peut conduire à la destruction de l'arbre à cames.

Le document DE 198 21 772 A1 est l'état de la technique le plus proche de l'objet de la revendication 1 et décrit un procédé pour le montage d'un arbre à cames dans lequel les éléments composants (les cames et les roulements) sont maintenus en position axiale par moyen de projections qui sont comprises dans les propres cames, et/ou par des entretoises arrangés dans le sens longitudinal de l'arbre. Ce document présente une solution alternative pour assurer le positionnement latéral des roulements, sans utiliser des bagues ou des circlips.

Le document US-A-4 450 609, considéré comme étant l'état de la technique le plus proche de l'objet de la revendication 6 décrit un manchon de protection en deux pièces, découpé intérieurement avec la forme des cames et de l'arbre, et un diamètre extérieur correspondant à celui des paliers de roulement. Cet accessoire est utilisé pour faciliter le procédé de montage d'un arbre à cames dans un bloc-moteur et pas dans une culasse.

Le but de la présente invention est de concevoir un nouveau procédé de positionnement et de montage dans la culasse d'un moteur de véhicule d'au moins un arbre à cames sur roulements, qui supprime le recours à des éléments supplémentaires de positionnement en latéral intégrés à l'arbre à cames lors du montage de ce dernier.

En d'autres termes, le but de la présente invention est de concevoir un tel nouveau procédé de positionnement et de montage, qui garantisse efficacement le positionnement et l'arrêt des roulements selon la direction axiale de l'arbre.

Un autre but de la présente invention est de réaliser un tel nouveau procédé qui apporte un gain substantiel de temps lors du montage de l'arbre à cames.

C'est également un but de la présente invention de réaliser un tel nouveau procédé qui réduise de façon substantielle le coût des pièces et du procédé de montage des arbres à cames.

Enfin, c'est également un but de la présente invention de fournir un dispositif de conception simple, robuste, fiable, économique, pour la mise en oeuvre facile du nouveau procédé de l'invention.

Pour parvenir à ces buts, la présente invention conçoit un nouveau procédé de positionnement et de montage dans la culasse d'un moteur de véhicule d'au moins un arbre à cames sur roulements suivant les caractéristiques de la revendication 1. Ce nouveau procédé comporte les étapes suivantes :
- mise en place de la culasse sur la ligne de montage,
- mise en place sur la culasse d'un gabarit découpé aux formes géométriques de l'arbre à cames, de ses éléments composants et roulements, ainsi qu'à la forme géométrique du plan de joint culasse/couvre culasse,
- pose de l'arbre à cames dans la culasse,
- retrait du gabarit, et
- pose et fixation du couvre culasse sur la culasse.

Selon un mode de réalisation préféré de l'invention, la mise en place sur la culasse du gabarit est réalisée à l'aide de moyens de centrage précis du gabarit sur la culasse.

De préférence, ces moyens de centrage précis sont constitués par des pions de centrage sur la culasse et des orifices réalisés dans le gabarit pour le passage des pions dans le gabarit.

La fixation du couvre culasse sur la culasse se fait par pose des vis de culasse et serrage au couple de l'ensemble.

Selon une variante particulière, le procédé de la présente invention s'applique au positionnement et au montage dans la culasse d'un moteur de véhicule d'un ensemble de deux arbres à cames sur roulements. Dans ce cas, le gabarit est un gabarit unique, découpé aux formes géométriques des deux arbres à cames sur roulements, d'axes sensiblement parallèles, de leurs éléments composants et de leurs roulements, ainsi qu'à la forme géométrique du plan de joint culasse/couvre culasse.

L'invention fournit également un nouveau dispositif suivant les caractéristiques de la revendication 6 pour la mise en oeuvre du procédé et de ses variantes exposés ci-dessus dans leurs grandes lignes. Ce nouveau dispositif est constitué d'une plaque plane ou gabarit qui présente une découpe intérieure précise aux formes géométriques d'au moins un arbre à cames, de ses éléments composants et roulements ainsi qu'à la forme géométrique du plan de joint culasse/couvre culasse.

Selon un mode de réalisation préféré dans lequel sont prévus des moyens de centrage précis du gabarit sur la culasse, le nouveau dispositif comporte, de plus, des orifices réalisés dans le gabarit pour le passage de pions de centrage du gabarit sur la culasse.

Chaque découpe intérieure précise aux formes géométriques d'un arbre à cames est composée d'une succession (selon la direction axiale de l'arbre) de découpes aux formes géométriques et dimensions axiales précises des composants de l'arbre à cames entre lesquelles sont intercalées des découpes aux formes géométriques et dimensions axiales précises des roulements.

De préférence, le gabarit est réalisé en matière plastique.

De préférence également, le gabarit est réalisé par moulage de la culasse, suivi d'un usinage.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 représente, de manière schématique, un arbre à cames sur roulements, avec des moyens de positionnement en latéral selon l'art antérieur,
- la figure 2 représente, de manière schématique, un exemple de dispositif de positionnement et de montage (gabarit) d'arbre à cames, selon la présente invention,
- la figure 3 représente, de manière schématique, un arbre à cames sur roulements en cours de montage, avec des moyens de positionnement et de montage selon la présente invention et représentés sur la figure 2, et
- les figures 4A à 4D représentent, de manière très schématique, le principe d'utilisation du dispositif selon la présente invention dans le positionnement et le montage d'un ensemble de deux arbres à cames sur roulements.

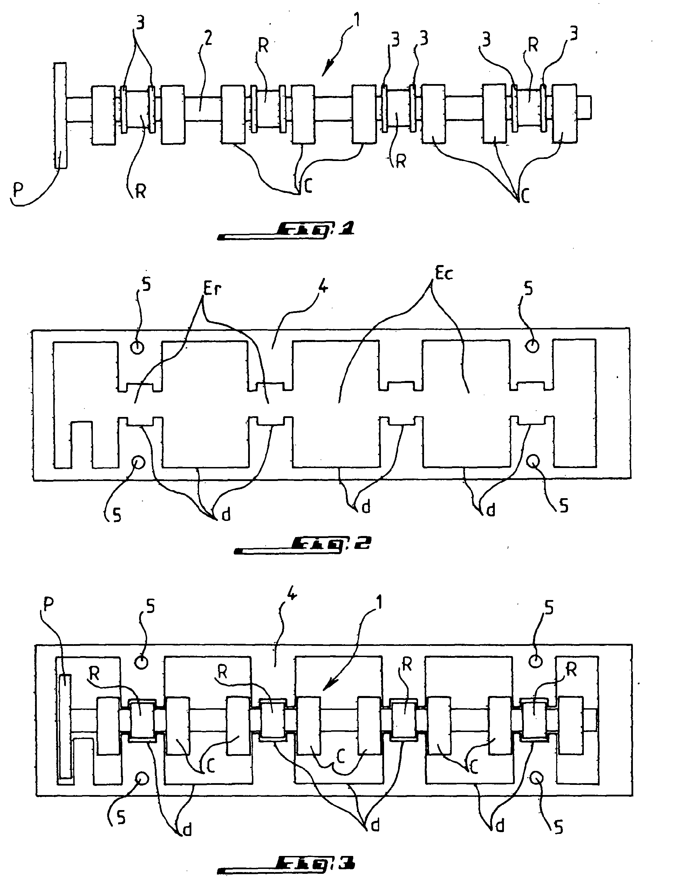

En référence au dessin de la figure 1, on a représenté un arbre à cames, de référence générale 1. Il est constitué d'une barre (ou tube) 2, de forte résistance aux torsions et à l'usure par frottement, sur laquelle sont montées, à titre d'exemple non limitatif de l'objet de l'invention, des cames C pour l'échappement et l'admission, de manière classique. Une poulie P est prévue pour l'entraînement de l'arbre à cames en rotation, commandé par le vilebrequin. De façon connue en soi, l'arbre à cames 1 peut également comporter d'autres éléments mécaniques, comme par exemple un pignon de commande d'allumeur, un excentrique de commande de pompe à essence, etc. En variante, on peut avoir deux arbres à cames, l'un comportant des cames d'admission et l'autre des cames d'échappement. On peut avoir aussi plusieurs arbres à cames qui commandent les soupapes d'admission et plusieurs arbres à cames qui commandent les soupapes d'échappement. La présente invention s'applique mutatis mutandis au positionnement et au montage simultanée de plusieurs arbres à cames sur une culasse de moteur, comme il sera décrit plus loin.

Des roulements référencés R, qui sont de préférence des roulements à aiguilles, sont montés sur l'arbre à cames 1 pour former des paliers avant, arrière ou centraux de l'arbre à cames 1 sur l'élément de culasse (ou de carter éventuellement) sur lequel l'arbre 1 est monté.

Dans le cas présent d'un montage de l'arbre à cames 1 sur la culasse (non représentée), les roulements R, après avoir été bien positionnés selon la direction axiale, sont maintenus en position par le serrage du couvre culasse ou chapeau de culasse sur la culasse. Les roulements R sont mis en position précise selon la direction axiale et maintenus en position par l'adjonction de rondelles en matière plastique ou circlips 3. Chaque roulement R est ainsi bloqué en position selon la direction axiale par deux rondelles (ou circlips) 3, situées en butée contre l'une et l'autre des deux faces latérales du roulement R.

Comme indiqué précédemment, la présente invention vise à supprimer le recours à des éléments supplémentaires de positionnement, par conséquent à supprimer le recours aux rondelles ou circlips 3, intégrés à l'arbre à cames 1 lors de son montage.

Le dispositif de l'invention permettant de supprimer ces éléments supplémentaires de positionnement sera mieux compris à l'aide des figures 2 et 3. Il est constitué d'un gabarit 4, en forme de plaque plane, en matière plastique, dont la forme géométrique est définie à partir de la spécification de la position des roulements R et de la forme du plan de joint culasse/couvre culasse.

Le gabarit 4 présente une forme générale sensiblement rectangulaire, dans laquelle est pratiquée une découpe de forme et de dimensions précises, au moins selon la direction longitudinale. La découpe est pratiquée selon une ligne de découpe, référencée « d », telle qu'elle permet l'insertion et le positionnement précis des composants de l'arbre à cames C, P, et des roulements R. Comme on peut le voir plus particulièrement sur le dessin de la figure 2, la forme de la découpe du gabarit 4 se présente sous la forme d'une succession de découpes principales Ec, rectangulaires, pour l'insertion et le positionnement précis en latéral des composants de type cames C et poulie P, et de découpes plus petites Er, rectangulaires, interposées entre les découpes principales Ec pour l'insertion et le positionnement précis en latéral des roulements à aiguilles R. Les positionnements précis en latéral sont obtenus par la position précise des bords transversaux des découpes.

En particulier, le positionnement précis des roulements R se fait par leur insertion dans les découpes Er, dont les bords transversaux sont positionnées selon la direction axiale de façon précise sur la culasse et dont la largeur axiale est précisément celle des roulements R, les autres composants de l'arbre à cames étant insérés dans les découpes Ec.

Ce gabarit 4 peut être réalisé par moulage de la culasse, suivi d'un usinage de celle-ci pour former le gabarit.

Il peut être prévu dans le gabarit 4 des orifices 5 pour le passage de pions de centrage (non représentés) du gabarit 4 sur la culasse, de façon à garantir une mise en place précise du gabarit 4 sur l'élément de culasse avant la pose de l'arbre à cames 1 équipé de ses roulements R. A titre d'exemple, ces pions de centrage, cylindriques, peuvent être au nombre de quatre, et les orifices 5 correspondant, circulaires, répartis sensiblement dans le voisinage des angles du rectangle constitutif de la forme du gabarit 4, respectivement.

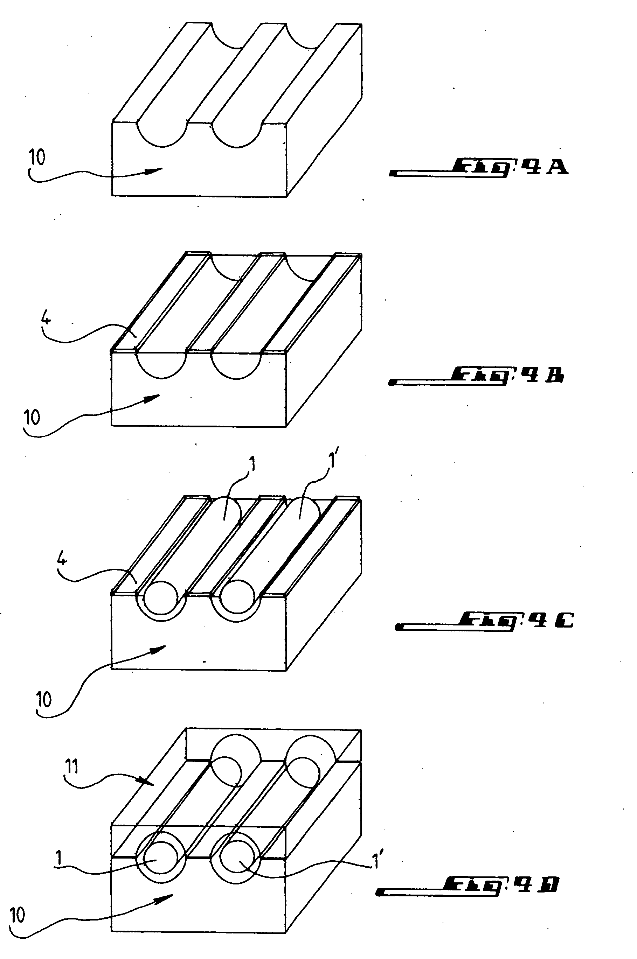

Le gabarit 4 peut être un gabarit découpé pour un arbre à cames unique (figure 2 et 3) ou pour deux arbres à cames (exemple des figures 4A à 4D) ou plus.

Le procédé de positionnement et de montage d'un ou plusieurs arbres à cames dans une culasse de moteur thermique de véhicule est illustré dans son principe, de manière très schématique, sur le dessin des figures 4A à 4D. Bien qu'illustré par un exemple dans lequel il s'agit de positionner et monter deux arbres à cames parallèles dans une même opération, ce principe est évidemment identique dans le cas d'un positionnement et d'un montage d'un seul arbre à cames.

La culasse 10 est mise en place sur la ligne de montage non représentée (figure 4A).

Ensuite, il y a mise en place sur la culasse 10 d'un gabarit 4 (gabarit double) découpé aux formes géométriques des deux arbres à cames, référencés 1 et 1', et de leurs éléments composants (poulie, cames, roulements, etc.), ainsi qu'à la forme géométrique du plan de joint culasse/couvre culasse (figure 4B). Le gabarit 4, comme déjà mentionné précédemment, peut être centré très précisément sur la culasse 10 grâce à des pions de centrage qui coopèrent avec des orifices de centrage 5 du gabarit 4 (figures 2 et 3).

Puis, on pose les deux arbres à cames 1, 1', dans la culasse 10 (figure 4C). Les arbres à cames 1, 1', se posent dans les emplacements en creux définis dans le gabarit 4. L'opérateur de montage s'assure que les roulements R se retrouvent bien dans les logements prévus à cet effet dans le gabarit 4. L'opérateur de montage retire ensuite le gabarit 4, puis pose et fixe le couvre culasse 11 sur la culasse 10 (figure 4D). Les roulements R étant frétés dans la culasse 10, ils ne bougent pas lorsque l'opérateur enlève le gabarit 4.

Le serrage garantit ensuite le maintien en position des roulements en fonctionnement. L'augmentation des jeux due à l'élévation de température n'est pas suffisante pour provoquer un déplacement latéral des roulements.

La présente invention, telle que décrite ci-dessus, présente de nombreux avantages.

Elle permet de supprimer l'utilisation d'éléments supplémentaires, tels que rondelles et circlips, sur l'arbre à cames pour assurer le positionnement et le blocage selon la direction axiale des roulements, comme y recourent les procédés de l'art antérieur.

Le procédé de montage des arbres à cames sur la culasse s'en trouve simplifié, avec un gain de temps substantiel dans le montage des arbres à cames, un gain sur le coût des pièces et sur le procédé dans son ensemble.

Le procédé selon l'invention offre aussi l'avantage de permettre d'effectuer un contrôle qualité à la source. Le positionnement précis, optimal, des arbres à cames sur roulements réduit les frottements et accroît leur durée de vie. Enfin, cette réduction des frottements permet de réduire la consommation du moteur, et par conséquent la pollution atmosphérique.

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention, telle que définie dans les revendications.

## Revendications

1. Procédé de positionnement et de montage dans la culasse d'un moteur de véhicule d'au moins un arbre à cames (1) sur roulements (R), **caractérisé en ce qu'**il comporte les étapes suivantes :
- mise en place de la culasse sur la ligne de montage,
- mise en place sur la culasse d'un gabarit (4) découpé aux formes géométriques de l'arbre à cames (1), de ses éléments composants (C, P) et roulements (R), ainsi qu'à la forme géométrique du plan de joint culasse/couvre culasse,
- pose de l'arbre à cames (1) dans la culasse,
- retrait du gabarit (4), et
- pose et fixation du couvre culasse sur la culasse.

2. Procédé selon la revendication 1, **caractérisé en ce que** la mise en place sur la culasse du gabarit (4) est réalisée à l'aide de moyens de centrage précis du gabarit sur la culasse.

3. Procédé selon la revendication 2, **caractérisé en ce que** les moyens de centrage précis sont constitués par des pions de centrage sur la culasse et des orifices (5) pour le passage des pions dans le gabarit (4).

4. Procédé selon la revendication 1, **caractérisé en ce que** la fixation du couvre culasse sur la culasse se fait par pose des vis de culasse et serrage au couple de l'ensemble.

5. Procédé de positionnement et de montage dans la culasse d'un moteur de véhicule de deux arbres à cames (1, 1') sur roulements (R), selon l'une quelconque des revendications 1 à 4, **caractérisé en ce que** le gabarit (4) est un gabarit unique, découpé aux formes géométriques des deux arbres à cames (1, 1') sur roulements, d'axes sensiblement parallèles, de leurs éléments composants et de leurs roulements, ainsi qu'à la forme géométrique du plan de joint culasse/couvre culasse.

6. Dispositif pour la mise en oeuvre du procédé selon la revendication 1, **caractérisé en ce qu'**il est constitué d'une plaque plane ou gabarit (4) qui présente une découpe intérieure (d) précise aux formes géométriques d'au moins un arbre à cames (1), de ses éléments composants (P, C) et roulements (R) ainsi qu'à la forme géométrique du plan de joint culasse/couvre culasse.

7. Dispositif selon la revendication 6, **caractérisé en ce qu'**il est constitué d'une plaque plane ou gabarit (4) qui présente une découpe intérieure (d) précise aux formes géométriques d'au moins un arbre à cames (1), et de ses éléments composants (P, C) et roulements (R), ainsi qu'à la forme géométrique du plan de joint culasse/couvre culasse, ladite plaque étant pourvue d'orifices (5) pour le passage de pions de centrage du gabarit (4) sur la culasse.

8. Dispositif selon l'une quelconque des revendications 6 et 7, **caractérisé en ce que** chaque découpe intérieure précise aux formes géométriques d'un arbre à cames (1) est composée d'une succession de découpes (Ec) aux formes géométriques et dimensions axiales précises des composants (P, C) de l'arbre à cames (1) entre lesquelles sont intercalées des découpes (Er) aux formes géométriques et dimensions axiales précises des roulements (R).

9. Dispositif selon l'une quelconque des revendications 6 à 8, **caractérisé en ce qu'**il est réalisé en matière plastique.

10. Dispositif selon l'une quelconque des revendications 6 à 9, **caractérisé en ce qu'**il est réalisé par moulage de la culasse, suivi d'un usinage.

## Claims

1. Method of positioning and mounting in the cylinder head of a vehicle engine at least one camshaft (1) on rolling-contact bearings (R), said method being **characterized in that** it comprises the following steps:
• placing the cylinder head on the assembly line,
• placing on the cylinder head a template (4) cut to the geometrical shapes of the camshaft (1) and of its component parts (C, P) and rolling-contact bearings (R), and to the geometrical shape of the parting line of the cylinder head/cylinder head cover,
• putting the camshaft (1) in the cylinder head,
• removing the template (4), and
• putting the cylinder head cover on and fixing it to the cylinder head.

2. Method according to Claim 1, **characterized in that** the template (4) is placed on the cylinder head using means for the precise centring of the template on the cylinder head.

3. Method according to Claim 2, **characterized in that** the precise centring means are centring pins on the cylinder head and holes (5) in the template (4) for the pins to pass through.

4. Method according to Claim 1, **characterized in that** the cylinder head cover is fixed to the cylinder head by inserting cylinder head bolts and tightening the assembly to the correct torque.

5. Method of positioning and mounting in the cylinder head of a vehicle engine two camshafts (1, 1') on rolling-contact bearings (R), according to any one of Claims 1 to 4, **characterized in that** the template (4) is a single template cut to the geometrical shapes of the two camshafts (1, 1') on rolling-contact bearings, with essentially parallel axes, of their component parts and of their rolling-contact bearings, and to the geometrical shape of the parting line of the cylinder head/cylinder head cover.

6. Device for implementing the method according to Claim 1, **characterized in that** it consists of a flat plate or template (4) with a precise internal void (d) cut to the geometrical shapes of at least one camshaft (1) and of its component parts (P, C) and rolling-contact bearings (R) and to the geometrical shape of the parting line of the cylinder head/cylinder head cover.

7. Device according to Claim 6, **characterized in that** it consists of a flat plate or template (4) that has a precise internal void (d) cut to the geometrical shapes of at least one camshaft (1) and of its component parts (P, C) and rolling-contact bearings (R), and to the geometrical shape of the parting line of the cylinder head/cylinder head cover, said plate being provided with holes (5) for the passage of pins for centring the template (4) on the cylinder head.

8. Device according to either of Claims 6 and 7, **characterized in that** each precise internal void cut to the geometrical shapes of a camshaft (1) is made up of a series of voids (Ec) cut to the precise geometrical shapes and axial dimensions of the components (P, C) of the camshaft (1), with voids (Er) between them cut to the precise geometrical shapes and axial dimensions of the rolling-contact bearings (R).

9. Device according to any one of Claims 6 to 8, **characterized in that** it is made of plastic.

10. Device according to any one of Claims 6 to 9, **characterized in that** it is moulded from the cylinder head and then machined.

## Patentansprüche

1. Verfahren zur Positionierung und Montage wenigstens einer Nockenwelle (1) auf Wälzlagern (R) im Zylinderkopf eines Fahrzeugmotors, **dadurch gekennzeichnet, dass** es die folgenden Schritte enthält:
- Anordnen des Zylinderkopfs auf der Montagelinie,
- Anordnen einer Schablone (4), die in die geometrischen Formen der Nockenwelle (1) und ihrer Bestandteile (C, P) und Wälzlager (R) sowie in die geometrische Form der Verbindungsebene zwischen Zylinderkopf und Zylinderkopfabdeckung zugeschnitten ist, auf dem Zylinderkopf,
- Anordnen der Nockenwelle (1) in dem Zylinderkopf,
- Zurückziehen der Schablone (4) und
- Anordnen und Befestigen der Zylinderkopfabdeckung auf dem Zylinderkopf.

2. Verfahren nach Anspruch 1, **dadurch gekennzeichnet, dass** das Anordnen der Schablone (4) auf den Zylinderkopf mit Hilfe von Mitteln zum präzisen Zentrieren der Schablone auf den Zylinderkopf erfolgt.

3. Verfahren nach Anspruch 2, **dadurch gekennzeichnet, dass** die Mittel zum präzisen Zentrieren durch Zentrierstifte am Zylinderkopf und durch Öffnungen (5) für den Durchgang der Stifte in der Schablone (4) gebildet sind.

4. Verfahren nach Anspruch 1, **dadurch gekennzeichnet, dass** die Befestigung der Zylinderkopfabdeckung am Zylinderkopf durch Anordnen von Zylinderkopfschrauben und Festklemmen mit Drehmoment der Gesamtheit erfolgt.

5. Verfahren zur Positionierung und Montage von zwei Nockenwellen (1, 1') auf Wälzlagern (R) im Zylinderkopf eines Fahrzeugmotors nach einem der Ansprüche 1 bis 4, **dadurch gekennzeichnet, dass** die Schablone (4) eine einzige Schablone ist, die in die geometrischen Formen der zwei Nockenwellen (1, 1') auf Wälzlagern mit im Wesentlichen parallelen Achsen, ihrer Bestandteile und ihrer Wälzlager sowie in die geometrische Form der Verbindungsebene zwischen Zylinderkopf und Zylinderkopfabdeckung zugeschnitten ist.

6. Vorrichtung zum Ausführen des Verfahrens nach Anspruch 1, **dadurch gekennzeichnet, dass** sie aus einer ebenen Platte oder einer Schablone (4) gebildet ist, die einen präzisen inneren Ausschnitt (d) aufweist, der den geometrischen Formen wenigstens einer Nockenwelle (1), ihrer Bestandteile (P, C) und Wälzlager (R) sowie der geometrischen Form der Verbindungsebene zwischen Zylinderkopf und Zylinderkopfabdeckung entspricht.

7. Vorrichtung nach Anspruch 6, **dadurch gekennzeichnet, dass** sie aus einer ebenen Platte oder einer Schablone (4) gebildet ist, die einen präzisen inneren Ausschnitt aufweist, der den geometrischen Formen wenigstens einer Nockenwelle (1), ihrer Bestandteile (P, C) und ihrer Wälzlager (R) sowie der geometrischen Form der Verbindungsebene zwischen Zylinderkopf und Zylinderkopfabdeckung entspricht, wobei die Platte mit Öffnungen (5) für den Durchgang von Stiften zur Zentrierung der Schablone (4) auf dem Zylinderkopf versehen ist.

8. Vorrichtung nach einem der Ansprüche 6 und 7, **dadurch gekennzeichnet, dass** jeder präzise innere Ausschnitt, der den geometrischen Formen einer Nockenwelle (1) entspricht, gebildet ist aus einer Folge von Ausschnitten (Ec), die den präzisen geometrischen Formen und axialen Abmessungen der Bestandteile (P, C) der Nockenwelle (1) entsprechen, zwischen denen Ausschnitte (Er), die den präzisen geometrischen Formen und axialen Abmessungen der Wälzlager (R) entsprechen, eingefügt sind.

9. Vorrichtung nach einem der Ansprüche 6 bis 8, **dadurch gekennzeichnet, dass** sie aus Kunststoff verwirklicht ist.

10. Vorrichtung nach einem der Ansprüche 6 bis 9, **dadurch gekennzeichnet, dass** sie durch Gießen des Zylinderkopfs, gefolgt von einer Bearbeitung, verwirklicht ist.
